# FASCICULE DE BREVET EUROPEEN

(11) **EP 0 987 506 B1**
(45) Date de publication et mention de la délivrance du brevet: **02.07.2003**
(21) Numéro de dépôt: 99401852.1
(22) Date de dépôt: 22.07.1999
(51) Int. Cl.: F25D 3/11, F25D 29/00

(54) **Procédé et appareil de congélation de produits en ligne**
Verfahren und Gerät zum Einfrieren von Waren in Reihen
Method and apparatus for in-line freezing of products

(30) Priorité: 14.09.1998 FR 9811418
(43) Date de publication de la demande: 22.03.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Cloarec, Alain, Résidence du Moulin Saint-Martin, 91160 Longjumeau (FR)
(74) Mandataire: Mellul-Bendelac, Sylvie Lisette

(56) Documents cités:
- WO-A-93/14358
- FR-A- 1 537 431
- FR-A- 2 708 422
- GB-A- 1 241 061
- GB-A- 1 482 484
- US-A- 5 460 015
- US-A- 5 467 612

## Description

La présente invention concerne un procédé et un appareil de congélation totale ou partielle de produits en ligne (la congélation partielle pouvant être qualifiée de "croûtage"), du type comportant une enceinte, un convoyeur d'introduction des produits dans l'enceinte et d'extraction de ceux-ci, et des moyens de transfert de froid pour la congélation des produits, ces moyens comportant au moins des moyens d'imprégnation du convoyeur avec un liquide cryogénique.

Le "croûtage" d'un produit est une opération consistant à congeler superficiellement au moins l'une des faces du produit en vue de faciliter sa préparation ou manipulation ultérieure.

La technique de croûtage est utilisée en particulier en alimentaire afin de faciliter la préparation et manipulation ultérieure des produits (tranchage, pesage...), on citera ici à titre illustratif le tranchage de barres de jambon et de longes de porc, mais on sait que ces techniques de croûtage sont également applicables à d'autres produits alimentaires devant subir une préparation tels que le salami, le saucisson, les fromages, les poissons etc..

L'imprégnation du convoyeur permet de congeler la face des produits en contact avec celui-ci, ce qui a pour résultat, entre autres, de supprimer tout phénomène d'adhérence entre les produits et le convoyeur. Le liquide cryogénique utilisé est généralement de l'azote liquide. On se reportera par exemple au document EP-A-576 665 qui décrit de telles techniques de croûtage de produits alimentaires.

Les appareils de croûtage, et plus particulièrement les systèmes d'imprégnation du convoyeur, connus actuellement, fonctionnent le plus souvent selon l'une des manières suivantes : soit le convoyeur est immergé dans un bain contenant le liquide cryogénique, soit le convoyeur est soumis à une aspersion de liquide cryogénique sur la face supérieure de son brin supérieur. La quantité de liquide cryogénique qui imprègne le convoyeur est choisie suivant la quantité de froid que l'on veut transférer aux produits et selon l'épaisseur de ceux-ci. Le convoyeur pourra donc être partiellement ou complètement saturé par le liquide cryogénique.

Le système d'imprégnation par un bain est complexe à mettre en oeuvre, puisqu'il faut immerger le convoyeur dans un bain et ce, avant l'introduction des produits ou après celle-ci.

Les systèmes d'imprégnation par aspersion présentent eux aussi des inconvénients, car il est difficile de maîtriser complètement l'imprégnation du tapis. En effet, la quantité de liquide cryogénique versée, avec ou sans pression, sur la face supérieure du convoyeur doit être suffisante pour que tout le brin du convoyeur soit imprégné et ce, malgré la présence des produits à croûter sur cette même face. On sait par ailleurs qu'une certaine quantité de liquide a tendance à percoler à travers les brins aller et retour du convoyeur. De plus, dans tous les cas, avec les systèmes connus, un phénomène d'essorage apparaît au niveau des rouleaux d'entraînement, à cause de la tension s'exerçant à cet endroit. Il y a donc du liquide cryogénique excédentaire, que l'on souhaite en général récupérer par un réceptacle et au moyen d'un groupe de pompage, pour être réutilisé ou évacué. Il faut cependant noter que ce liquide récupéré comporte des fines qui proviennent des produits à croûter. Ces fines occasionnent un encrassement des tuyauteries du système de récupération et de recyclage du liquide cryogénique.

L'invention a notamment pour objectif de proposer un procédé et un appareil de congélation complète ou partielle en ligne, ne présentant pas les inconvénients mentionnés ci-dessus, et en particulier qui permette une imprégnation maîtrisée des convoyeurs et qui permette de pouvoir se passer de tout système de récupération et de recyclage de liquide cryogénique excédentaire.

A cet effet, l'invention a pour objet un procédé pour congeler totalement ou partiellement des produits en ligne du type précité, se caractérisant par la mise en oeuvre combinée des mesures suivantes :
a) on réalise l'imprégnation du convoyeur par projection du liquide cryogénique sur la face inférieure du brin supérieur du convoyeur;
b) on effectue un contrôle de l'imprégnation du convoyeur;
c) on régule la projection de liquide cryogénique en fonction du résultat du contrôle d'imprégnation de l'étape b).

Suivant des modes particuliers de réalisation, le procédé selon l'invention peut présenter l'une ou plusieurs des caractéristiques suivantes :
- on réalise la projection du liquide cryogénique sur la face inférieure du brin supérieur du convoyeur à l'aide d'au moins une buse de projection située entre les deux brins du convoyeur et dont l'ouverture est orientée vers le brin supérieur du convoyeur ;
- ledit contrôle d'imprégnation permet d'évaluer la non imprégnation du brin supérieur du convoyeur au niveau de l'extraction des produits ;
- ledit contrôle comporte une mesure de température au voisinage du brin supérieur du convoyeur ;
- le procédé comporte en outre l'action de pulvériser directement du liquide cryogénique sur les produits, selon un jet disposé à peu près perpendiculairement à la direction de convoyage des produits .

L'invention concerne également un appareil pour congeler totalement ou partiellement des produits en ligne, du type comportant une enceinte, un convoyeur d'introduction des produits dans l'enceinte et d'extraction de ceux-ci, et des moyens de transfert de froid pour la congélation des produits, ces moyens comportant des moyens d'imprégnation du convoyeur avec un liquide cryogénique, l'appareil se caractérisant en ce que les moyens d'imprégnation dudit convoyeur sont adaptés pour projeter le liquide cryogénique sur la face inférieure du brin supérieur du convoyeur, et en ce qu'il comporte des moyens de contrôle de l'imprégnation du convoyeur, et des moyens aptes à réguler le fonctionnement des moyens d'imprégnation en fonction du résultat du contrôle d'imprégnation.

L'appareil selon l'invention peut par ailleurs comporter l'une ou plusieurs des caractéristiques suivantes :
- les moyens d'imprégnation du convoyeur comportent au moins une buse de projection située entre les deux brins du convoyeur et dont l'ouverture est orientée vers le brin supérieur du convoyeur ;
- l'ouverture de sortie de la buse est inclinée vers l'aval, en considérant la direction de déplacement du convoyeur, par exemple avec un angle proche de 45° par rapport au plan du brin supérieur du convoyeur ;
- les moyens de contrôle sont adaptés pour contrôler la non imprégnation du brin supérieur du convoyeur au niveau de l'extraction des produits ;
- les moyens de contrôle comportent une sonde de température proche du brin supérieur du convoyeur ;
- les moyens de transfert de froid aux produits comportent en outre des moyens de pulvérisation directe comportant une buse pulvérisant un jet de liquide cryogénique, à peu près perpendiculairement à la direction de convoyage des produits ;
- les moyens de transfert de froid comportent des moyens de brassage de l'atmosphère contenue dans l'enceinte, situés préférentiellement en aval des moyens d'imprégnation.

D'autres avantages de la présente invention ressortiront de la description suivante donnée uniquement à titre illustratif et fait en référence aux dessins annexés sur lesquels :
- la Fig. 1 représente schématiquement un appareil de congélation suivant l'invention ;
- la Fig. 2 représente à plus grande échelle le détail II de la Fig. 1 ; et
- la Fig. 3 est une vue analogue à la Fig.1 d'une variante.

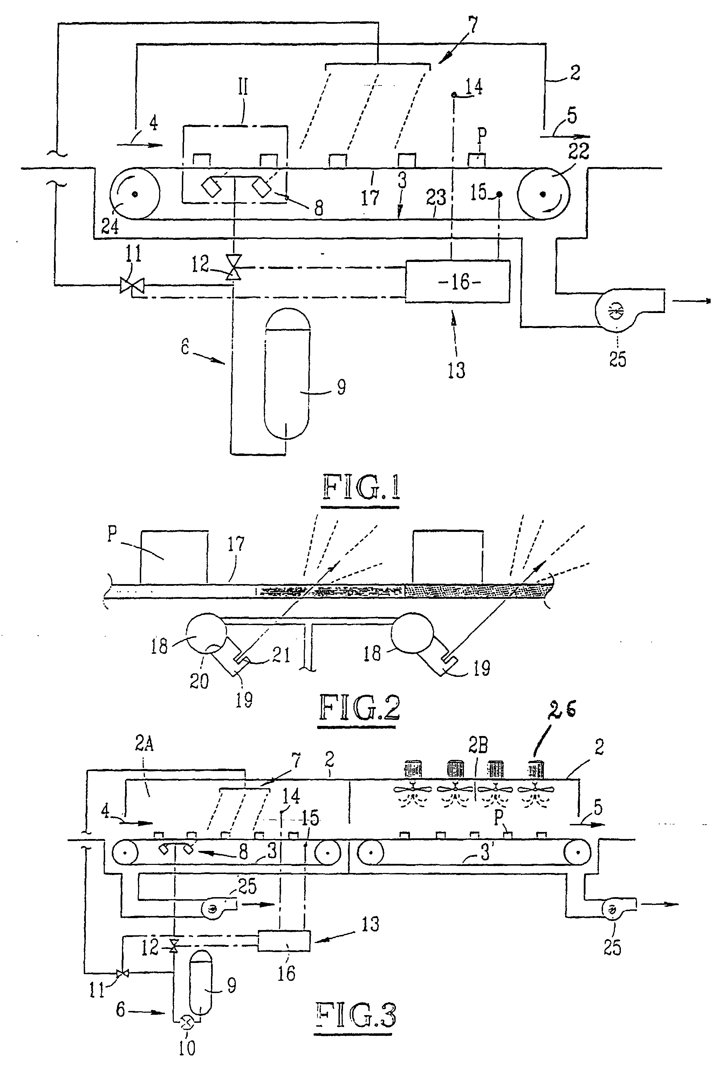

L'appareil 1 représenté sur la Fig. 1 est destiné au croûtage de produits P. Cet appareil est précédé d'un convoyeur d'amenée des produits P, et suivi d'un convoyeur d'extraction de ces produits, qui mène à un appareil de préparation des produits P (non représenté). L'appareil de préparation est par exemple une unité de tranchage pour découper de façon déterminée les produits préalablement croûtés issus de l'appareil de croûtage 1. L'appareil de préparation est avantageusement adapté pour émettre un signal de demande de produits lorsque la préparation du produit précédent est achevée. Ainsi, l'appareil de préparation peut être continuellement alimenté, ce qui optimise son rendement.

L'appareil de croûtage 1 comporte essentiellement une enceinte 2, ici en forme de tunnel, traversée par un convoyeur 3 de transport des produits P à croûter. Ce convoyeur 3 est formé par exemple par un convoyeur à bandes. Le convoyeur est composé d'une matière flexible, poreuse, possédant une capacité calorifique faible, afin de pouvoir rapidement atteindre un équilibre thermique avec le liquide cryogénique. Il peut notamment s'agir d'un tapis en matériau polymère synthétique, par exemple en Tergal®, agencé de façon à former des pores suffisamment petits pour y retenir le liquide cryogénique, par exemple sous forme d'un mat de fibres polymères tissé ou non tissé.

L'enceinte 2 est de forme parallélépipédique et comporte des ouvertures opposées 4, 5 formant respectivement une ouverture d'introduction des produits à croûter, et une ouverture d'extraction des produits croûtés. Toutes les parois de l'enceinte 2 sont ici revêtues d'un isolant thermique afin de réduire des transferts de chaleur entre l'intérieur de l'enceinte 2 et le milieu ambiant.

Dans l'enceinte 2 sont disposés des moyens 6 de transfert de froid aux produits P. Ces moyens comportent des moyens 7 de pulvérisation directe du liquide cryogénique sur les produits P, et des moyens 8 d'imprégnation du convoyeur 3. Sur la Fig. 1, les moyens de transfert de froid 6 comportent un système d'alimentation en liquide cryogénique qui se compose d'un réservoir 9 de liquide cryogénique, et de vannes d'alimentation 11 et 12. Ces vannes peuvent être par exemple des vannes à action proportionnelle ou éventuellement des boîtes froides. Une boîte froide consiste en l'association de deux électrovannes, ce qui permet le choix entre deux types de débit : un débit fort, adapté pour le refroidissement du matériel avant le début de l'introduction des produits P, et un débit réduit adapté au régime de production, ce débit étant suffisant au maintien d'une certaine température à l'intérieur de l'enceinte.

Les moyens de transfert de froid 6 comportent aussi des moyens 13 de contrôle de l'alimentation du tunnel en liquide cryogénique. Ces moyens de contrôle comportent des capteurs 14, 15 qui peuvent être des capteurs de température, ainsi qu'un régulateur 16 qui, notamment à l'aide des données issues des capteurs pilote les vannes d'alimentation 11 et 12.

La vanne 11 d'alimentation des moyens de pulvérisation directe 7 est par exemple pilotée par la sonde de température 14 placée à l'intérieur de l'enceinte 2, et qui détermine la température intérieure de cette enceinte.

La vanne 12 d'alimentation des moyens 8 d'imprégnation du convoyeur 3 est pilotée par le capteur 15, qui est adapté pour déterminer la non imprégnation du brin supérieur 17 du convoyeur 3.

Ce capteur 15 est une sonde de température, située à proximité du brin supérieur 17 du convoyeur 3, au niveau de l'extraction des produits P. La non imprégnation du brin supérieur 17 du convoyeur 3, c'est-à-dire l'absence de liquide cryogénique dans celui-ci, se caractérise par une élévation rapide de sa température. Le régulateur 16 détermine, suivant la température, si le convoyeur est encore imprégné par le liquide cryogénique au niveau de la saisie de cette température. Il envoie alors, en conséquence, des signaux de commande à la vanne d'alimentation 12 des moyens d'imprégnation 8.

Les moyens 8 d'imprégnation du convoyeur 3 comprennent plusieurs rampes transversales 18 situées entre les deux brins du convoyeur 3. Ces rampes 18 sont munies de plusieurs buses 19 placées à proximité et au-dessous du brin supérieur 17 du convoyeur 3. Ces buses pulvérisent le liquide cryogénique obliquement vers l'avant et vers le haut, directement sur la face inférieure du brin supérieur 17. On peut considérer que celui-ci réagit comme un filtre diphasique, si bien que liquide cryogénique reste dans le brin 17 et le gaz issu de la vaporisation de ce liquide cryogénique passe au-dessus de ce brin.

Sur la figure 2, la couleur grise du brin 17 est relative à son niveau d'imprégnation. Les buses utilisées sont, par exemple, des buses du type miroir telles que les buses "type K", commercialisées par la société SPRAYING SYSTEM.

La figure 2 montre le fonctionnement de ce type de buses. Il s'agit essentiellement d'un type de buse où la direction de l'ouverture 20 d'alimentation en liquide cryogénique de la buse 19 est perpendiculaire à la direction de l'ouverture 21 d'expulsion du liquide. Sur la figure 2, ces buses sont positionnées de telle sorte que la direction de pulvérisation du liquide cryogénique fasse un angle vers l'avant et vers le haut, avec la direction du brin supérieur 17 du convoyeur 3 (ici un angle proche de 45°). Cet angle peut être facilement adapté suivant les besoins.

Un des intérêts de ce montage apparaît lors du nettoyage de l'appareil de croûtage. En effet, le liquide de nettoyage est susceptible de pénétrer par l'ouverture d'éjection 21 des buses 19, mais il ne peut remonter à l'intérieur des rampes 18. Il n'y a donc pas de risque de colmatage par le liquide de nettoyage.

Par ailleurs, les moyens 8 d'imprégnation du brin supérieur 17 sont constitués de telle façon que seul celui-ci est imprégné. En effet, le régulateur 16 donne des ordres à la vanne d'alimentation 12 de telle façon que la température détectée par le capteur 15 corresponde à un brin non imprégné. Il n'y a donc pas de phénomène d'essorage au passage des roues d'entraînement avant 22 (maîtrise de la longueur d'imprégnation). De plus, grâce à l'agencement des buses 19, il n'y a pas d'excès de liquide tombant sur le brin inférieur 23 du convoyeur 3. Il n'y a donc pas non plus de phénomène d'essorage au niveau des roues de renvoi arrière 24, et il n'est pas nécessaire de prévoir un système de récupération du liquide cryogénique excédentaire. Ceci simplifie grandement la construction, l'utilisation et l'entretien de l'appareil de croûtage.

Les moyens 7 de pulvérisation directe de liquide cryogénique sur les produits P comportent plusieurs rampes 18 munies de buses de type dit VV. Il s'agit de buses à jet plat ou encore conique, ayant un grand angle de dispersion latérale, et alimentées avec une pression élevée. Ces buses sont placées de sorte que le jet plat soit perpendiculaire à la direction de convoyage des produits. Ainsi, les produits passent successivement sous une série de rideaux de liquide cryogénique, le nombre de rideaux correspondant au nombre de rampes.

L'appareil de croûtage 1 comprend un système d'extraction 25 qui rejette dans l'atmosphère les gaz froids excédentaires (mélange de liquide cryogénique vaporisé et d'air extérieur).

La figure 3 représente une variante de l'appareil de croûtage 1 représenté à la figure 1. Dans ce cas, l'enceinte 2 comporte deux chambres 2A et 2B, communiquant entres elles et traversées chacune par un convoyeur, les produits passent de façon continue d'une chambre 2A à l'autre 2B. La première chambre 2A comprend tous les éléments de l'appareil de croûtage représenté à la figure 1. La deuxième chambre 2B est équipée de ventilateurs 26 brassant l'atmosphère de cette chambre.

Cette mise en circulation de l'atmosphère, qui se trouve à une température très basse autour des produits P favorise les phénomènes de convection et améliore le croûtage des produits. En variante, les moyens de brassage 26 peuvent se trouver dans un appareil de croûtage ne disposant que d'une chambre unique. Il sont alors placés de telle manière que les gaz mis en mouvement ne perturbent pas les jets émis par les moyens de pulvérisation directe 7.

## Revendications

1. Procédé pour congeler totalement ou partiellement des produits (P) en ligne, à l'intérieur d'une enceinte (2) traversée par un convoyeur (3) d'introduction des produits (P) dans l'enceinte et d'extraction de ceux-ci, selon lequel on procède (8) à l'imprégnation du convoyeur (3) avec un liquide cryogénique, on met en contact le produit avec le convoyeur ainsi imprégné de façon à assurer la congélation partielle ou totale du produit par transfert thermique entre le produit et le liquide cryogénique ainsi retenu dans la structure du convoyeur, **caractérisé par** la mise en oeuvre combinée des mesures suivantes :
a) on réalise l'imprégnation du convoyeur (3) par projection du liquide cryogénique sur la face inférieure du brin supérieur (17) du convoyeur (3) ;
b) on effectue un contrôle (13) de l'imprégnation du convoyeur (3) ;
c) on régule la projection de liquide cryogénique en fonction du résultat du contrôle d'imprégnation de l'étape b).

2. Procédé selon la revendication 1, **caractérisé en ce que** l'on réalise la projection du liquide cryogénique sur la face inférieure du brin supérieur (17) du convoyeur (3) à l'aide d'au moins une buse de projection (19) située entre les deux brins du convoyeur (3) et dont l'ouverture est orientée vers le brin supérieur (17) du convoyeur (3).

3. Procédé selon la revendication 1 ou 2, **caractérisé en ce que** ledit contrôle (13) permet d'évaluer la non imprégnation du brin supérieur (17) du convoyeur (3) au voisinage de l'extraction des produits (P).

4. Procédé selon l'une des revendications précédentes, **caractérisé en ce que** ledit contrôle comporte une mesure de température (15) au voisinage du brin supérieur (17) du convoyeur (3).

5. Procédé selon la revendication 3 ou 4, **caractérisé en ce que** l'on régule la projection de liquide cryogénique de façon à ce que ledit contrôle d'imprégnation fournisse un résultat correspondant à un brin non imprégné.

6. Procédé selon l'une des revendication précédentes, **caractérisé en ce qu'**il comporte en outre l'action de pulvériser directement (7) du liquide cryogénique sur les produits, selon un jet disposé à peu près perpendiculairement à la direction de convoyage des produits (P).

7. Appareil pour congeler totalement ou partiellement des produits (P) en ligne, du type comportant une enceinte (2), un convoyeur (3) d'introduction des produits (P) dans l'enceinte et d'extraction de ceux-ci, et des moyens de transfert de froid (6) pour la congélation des produits, ces moyens de transfert comportant des moyens (8) d'imprégnation du convoyeur (3) avec un liquide cryogénique, **caractérisé en ce que** les moyens (8) d'imprégnation dudit convoyeur (3) sont adaptés pour projeter le liquide cryogénique sur la face inférieure du brin supérieur (17) du convoyeur (3), et **en ce qu'**il comporte des moyens de contrôle (15) de l'imprégnation du convoyeur (3), et des moyens (16, 12) aptes à réguler le fonctionnement des moyens d'imprégnation en fonction du résultat du contrôle d'imprégnation.

8. Appareil selon la revendication 7, **caractérisé en ce que** les moyens (8) d'imprégnation du convoyeur (3) comportent au moins une buse de projection (19) située entre les deux brins du convoyeur (3) et dont l'ouverture est orientée vers le brin supérieur (17) du convoyeur (3).

9. Appareil selon la revendication 8, **caractérisé en ce que** l'ouverture de sortie de la buse (19) est inclinée vers l'aval en considérant la direction de déplacement du convoyeur, notamment avec un angle de 45° par rapport au plan du brin supérieur (17) du convoyeur (3).

10. Appareil selon l'une quelconque des revendications 7 à 9, **caractérisé en ce que** les moyens de contrôle sont adaptés pour contrôler la non imprégnation du brin supérieur (17) du convoyeur (3) au niveau de l'extraction des produits (P).

11. Appareil selon l'une quelconque des revendications 7 à 10, **caractérisé en ce que** les moyens de contrôle comportent une sonde de température (15) proche du brin supérieur (17) du convoyeur (3).

12. Appareil selon l'une quelconque des revendications 7 à 11, **caractérisé en ce que** les moyens (6) de transfert de froid aux produits (P) comportent en outre des moyens de pulvérisation directe (7) de liquide cryogénique sur les produits.

13. Appareil selon l'une quelconque des revendications 7 à 12, **caractérisé en ce que** les moyens de transfert de froid (6) comportent des moyens (26) de brassage de l'atmosphère contenue dans l'enceinte (2).

## Patentansprüche

1. Verfahren zum völligen oder teilweisen Einfrieren von Waren (P) in Reihen im Inneren eines Raumes (2), durch den hindurch ein Förderband (3) zur Einführung der Waren (P) in den Raum und zur Entnahme aus demselben verläuft, bei dem das Förderband (3) mit einer kryogenen Flüssigkeit imprägniert (8) wird, die Ware mit dem auf diese Weise imprägnierten Förderband in Kontakt gebracht wird, um das teilweise oder völlige Einfrieren der Ware durch Wärmeübertragung zwischen der Ware und der auf diese Weise in der Struktur des Förderbandes gehaltenen kryogenen Flüssigkeit zu gewährleisten, **gekennzeichnet durch** den kombinierten Einsatz der folgenden Maßnahmen:
a) Imprägnieren des Förderbandes (3) **durch** Spritzen der kryogenen Flüssigkeit auf die Unterseite des oberen Gurts (17) des Förderbandes (3);
b) Kontrolle (13) der Imprägnierung des Förderbandes (3);
c) Regeln des Spritzens von kryogener Flüssigkeit in Abhängigkeit von dem Ergebnis der Imprägnierkontrolle aus Schritt b).

2. Verfahren nach Anspruch 1, **dadurch gekennzeichnet, dass** das Spritzen der kryogenen Flüssigkeit auf die Unterseite des oberen Gurts (17) des Förderbandes (3) mittels mindestens einer Spritzdüse (19) erfolgt, die sich zwischen den beiden Gurten des Förderbandes (3) befindet und deren Öffnung auf den oberen Gurt (17) des Förderbandes (3) gerichtet ist.

3. Verfahren nach Anspruch 1 oder 2, **dadurch gekennzeichnet, dass** es die Kontrolle (13) ermöglicht, die Nichtimprägnierung des oberen Gurts (17) des Förderbandes (3) in der Nähe der Entnahme der Waren (P) zu bewerten.

4. Verfahren nach einem der vorhergehenden Ansprüche, **dadurch gekennzeichnet, dass** die Kontrolle eine Temperaturmessung (15) in der Nähe des oberen Gurts (17) des Förderbandes (3) umfasst.

5. Verfahren nach Anspruch 3 oder 4, **dadurch gekennzeichnet, dass** das Spritzen von kryogener Flüssigkeit derart geregelt wird, dass die Imprägnierkontrolle ein Ergebnis liefert, das einem nicht imprägnierten Gurt entspricht.

6. Verfahren nach einem der vorhergehenden Ansprüche, **dadurch gekennzeichnet, dass** es ferner die direkte Zerstäubung (7) der kryogenen Flüssigkeit auf die Waren umfasst, entlang einem Strahl, der ungefähr senkrecht zur Förderrichtung der Waren (P) angeordnet ist.

7. Gerät zum völligen oder teilweisen Einfrieren von Waren (P) in Reihen, umfassend einen Raum (2), ein Förderband (3) zur Einführung der Waren (P) in den Raum und zur Entnahme aus demselben und Kälteübertragungsmittel (6) zum Einfrieren der Waren, wobei diese Übertragungsmittel Mittel (8) zum Imprägnieren des Förderbandes (3) mit einer kryogenen Flüssigkeit umfassen, **dadurch gekennzeichnet, dass** die Mittel (8) zum Imprägnieren des Förderbandes (3) derart ausgeführt sind, dass sie die kryogene Flüssigkeit auf die Unterseite des oberen Gurts (17) des Förderbandes (3) spritzen, und dass es Mittel (15) zur Kontrolle der Imprägnierung des Förderbandes (3) und Mittel (16, 12), die die Funktion der Imprägniermittel in Abhängigkeit von dem Ergebnis der Imprägnierkontrolle regeln können, umfasst.

8. Gerät nach Anspruch 7, **dadurch gekennzeichnet, dass** die Mittel (8) zum Imprägnieren des Förderbandes (3) mindestens eine Spritzdüse (19) umfassen, die zwischen den beiden Gurten des Förderbandes (3) angeordnet ist und deren Öffnung auf den oberen Gurt (17) des Förderbandes (3) gerichtet ist.

9. Gerät nach Anspruch 8, **dadurch gekennzeichnet, dass** die Ausgangsöffnung der Düse (19) bei Inbezugnahme der Verschieberichtung des Förderbandes zum nachlaufseitigen Teil hin geneigt ist, insbesondere in einem Winkel von 45° zu dem oberen Gurt (17) des Förderbandes (3).

10. Gerät nach einem der Ansprüche 7 bis 9, **dadurch gekennzeichnet, dass** die Kontrollmittel derart ausgeführt sind, dass sie die Nichtimprägnierung des oberen Gurts (17) des Förderbandes (3) im Bereich der Entnahme der Waren (P) kontrollieren.

11. Gerät nach einem der Ansprüche 7 bis 10, **dadurch gekennzeichnet, dass** die Kontrollmittel einen Temperaturfühler (15) in der Nähe des oberen Gurts (17) des Förderbandes (3) umfassen.

12. Gerät nach einem der Ansprüche 7 bis 11, **dadurch gekennzeichnet, dass** die Mittel (6) zur. Übertragung von Kälte auf die Waren (P) ferner Mittel (7) zur direkten Zerstäubung von kryogener Flüssigkeit auf die Waren umfassen.

13. Gerät nach einem der Ansprüche 7 bis 12, **dadurch gekennzeichnet, dass** die Kälteübertragungsmittel (6) Mittel (26) zum Durchwirbeln der in dem Raum (2) enthaltenen Luft umfassen.

## Claims

1. Process for the in-line partial or complete freezing of products (P) inside an enclosure (2) along which a conveyor (3) for introducing the products (P) into the enclosure and for extracting them travels, according to which process the conveyor (3) is impregnated (8) with a cryogenic liquid, the product is brought into contact with the conveyor thus impregnated so as to ensure that the product is partially or completely frozen by heat transfer between the product and the cryogenic liquid thus retained in the structure of the conveyor, **characterized by** the combined implementation of the following steps:
a) the conveyor (3) is impregnated by spraying the cryogenic liquid onto the lower face of the upper run (17) of the conveyor (3);
b) a check is made (13) of the impregnation of the conveyor (3);
c) the spraying of cryogenic liquid is regulated depending on the result of the impregnation check in step b).

2. Process according to Claim 1, **characterized in that** the cryogenic liquid is sprayed onto the lower face of the upper run (17) of the conveyor (3) by means of at least one spray nozzle (19) which is located between the two runs of the conveyor (3) and the opening of which spray nozzle is oriented toward the upper run (17) of the conveyor (3).

3. Process according to Claim 1 or 2, **characterized in that** said check (13) makes it possible to determine the extent to which the upper run (17) of the conveyor (3) is not impregnated near the point where the products (P) are extracted.

4. Process according to one of the preceding claims, **characterized in that** said check includes a measurement of the temperature (15) near the upper run (17) of the conveyor (3).

5. Process according to Claim 3 or 4, **characterized in that** the spraying with cryogenic liquid is regulated so that the said impregnation check provides a result corresponding to a run that is not impregnated.

6. Process according to one of the preceding claims, **characterized in that** it furthermore includes the action of spraying (7) the cryogenic liquid directly onto the products in a jet arranged so as to be almost perpendicular to the direction in which the products (P) are conveyed.

7. Apparatus for the in-line partial or complete freezing of products (P), of the type comprising an enclosure (2), a conveyor (3) for introducing the products (P) into the enclosure and for extracting them, and refrigerating means (6) for freezing the products, these means comprising means (8) for impregnating the conveyor (3) with a cryogenic liquid, **characterized in that** the means (8) for impregnating said conveyor (3) are suitable for spraying the cryogenic liquid onto the lower face of the upper run (17) of the conveyor (3) and **in that** it includes means (15) for checking the impregnation of the conveyor (3) and means (16, 12) suitable for regulating the operation of the impregnation means depending on the result of the impregnation check.

8. Apparatus according to Claim 7, **characterized in that** the means (8) for impregnating the conveyor (3) comprise at least one spray nozzle (19) located between the two runs of the conveyor (3) and the opening of which spray nozzle is oriented towards the upper run (17) of the conveyor (3).

9. Apparatus according to Claim 8, **characterized in that** the outlet of the nozzle (19) is inclined toward the downstream end with respect to the direction of travel of the conveyor, especially at an angle of 45° with respect to the plane of the upper run (17) of the conveyor (3).

10. Apparatus according to any one of Claims 7 to 9, **characterized in that** the checking means are suitable for checking the extent to which the upper run (17) of the conveyor (3) is not impregnated at the point where the products (P) are extracted.

11. Apparatus according to any one of Claims 7 to 10, **characterized in that** the checking means include a temperature probe (15) close to the upper run (17) of the conveyor (3).

12. Apparatus according to any one of Claims 7 to 11, **characterized in that** the means (6) for refrigerating the products (P) furthermore include means (7) for spraying cryogenic liquid directly onto the products.

13. Apparatus according to any one of Claims 7 to 12, **characterized in that** the refrigerating means (6) include means (26) for mixing the atmosphere contained in the enclosure (2).
